Europäisches Patentamt

European Patent Office

Office européen des brevets

(19)

(11) Numéro de publication: **0 169 766**
**B1**

(12) **FASCICULE DE BREVET EUROPEEN**

(45) Date de publication du fascicule du brevet:
24.08.88

(51) Int. Cl.⁴: **D 04 B 35/12**

(21) Numéro de dépôt: **85401289.5**

(22) Date de dépôt: **26.06.85**

(54) **Dispositif perfectionné pour la mesure de la longueur de fil absorbé par une machine textile.**

(30) Priorité: **26.06.84 FR 8410068**

(43) Date de publication de la demande:
**29.01.86 Bulletin 86/5**

(45) Mention de la délivrance du brevet:
**24.08.88 Bulletin 88/34**

(84) Etats contractants désignés:
**AT BE CH DE GB IT LI LU NL SE**

(56) Documents cités:
**FR - A - 972 855**
**FR - A - 1 145 977**
**US - A - 3 677 036**

(73) Titulaire: **Centre Technique Industriel dit: INSTITUT TEXTILE DE FRANCE, 35, rue des Abondances, F-92100 Boulogne-Billancourt Cédex (FR)**
Titulaire: **Centre scientifique et technique de l'Industrie textile belge en abrégé "Centexbel", rue Montoyer 24, B-1040 Bruxelles (BE)**

(72) Inventeur: **Matthelie, Jean-Pierre Adrien, 13, rue Colonel Driant Les Noes près Troyes, F-10600 La Chapelle St Luc (FR)**

(74) Mandataire: **Levesque, Denys et al, Cabinet Beau de Loménie 55, rue d'Amsterdam, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

# Description

La présente invention concerne un dispositif de mesure de longueur de fil absorbée par une machine textile, du type comportant un organe tournant entraîné par le fil lors de son déplacement. Elle s'applique plus particulièrement à la mesure de la longueur de fil absorbée par maille (LFA) lors du tricotage sur des métiers à appel intermittent du fil, comme les métiers rectilignes.

Dans la production d'articles textiles, la constance de la longueur de fil absorbée par la machine de production est indispensable pour obtenir une parfaite reproductibilité tout au long de la production. Ainsi la variation de la LFA sur un métier rectiligne entraîne corrélativement une variation des dimensions du panneau tricoté. Or pour un même réglage du métier, la LFA peut varier au cours du tricotage en cas d'irrégularité du fil lui-même, notamment en cas de fluctuation du coefficient de frottement du fil. Il est donc important de mesurer la LFA pour pouvoir en corriger les variations, sout par réglage des organes du métier soit en effectuant une régulation par action de certains organes pour corriger les variations constatées. Ce principe de régulation est connu notamment par le brevet français FR-A-77 25038, qui préconise de mesurer la longueur de fil tricoté en faisant passer le fil autour d'un organe tournant de manière à ce que le contact soit sans glissement: on peut donc mesurer la longueur de fil d'après la vitesse de rotation de l'organe tournant. Le brevet français FR-A-69 07568 enseigne également un procédé et un dispositif de mesure de la longueur de fil absorbée sur les métiers de bonneterie mettant en œuvre un organe tournant entraîné par le fil; dans ce brevet, l'organe tournant est un disque pourvu de secteurs réfléchissants alternés avec des secteurs beaucoup moins réfléchissants, éclairé en permanence et la longueur de fil est mesurée par comptage des impulsions provenant d'un capteur traduisant les variations d'éclairement en impulsions électriques.

Avec tous les dispositifs qui comportent un organe tournant, la mesure de la longueur du fil ne peut être faite valablement que lorsque l'organe tournant se déplace à la même vitesse que le fil, et que donc il n'y a pas de glissement entre le fil et l'organe tournant. Cela est obtenu soit à l'aide de moyens empêchant les glissements comme dans le brevet FR-A-77 25038 et modifiant de ce fait la tension du fil, soit en n'effectuant la mesure qu'après un temps suffisant pour que l'organe tournant ait atteint la vitesse de déplacement du fil après la phase de démarrage et donc de glissement. Ces solutions ne donnent pas entièrement satisfaction, en particulier lorsqu'on veut mesurer la LFA lors du tricotage sur métiers à appel intermittent du fil, comme les métiers rectilignes. En effet dans ce dernier cas, le fil subit des à-coups importants lors des déplacements droite-gauche et gauche-droite du chariot: la vitesse du fil est nulle en début et fin de courses, hors zone de tricotage, pour atteindre des valeurs de plusieurs mètres par seconde. Si l'on utilise un organe tournant sans movens particuliers pour empêcher le glissement, le glissement est tel que l'on n'a plus matériellement le temps d'effectuer la mesure de LFA pendant une course du chariot. Si l'on utilise des moyens pour empêcher le glissement, compte tenu des efforts subis par le fil au moment de la mise en rotation de l'organe tournant, il se produit des ruptures de fil en lisière, généralement plus fréquentes du côté où l'on alimente le métier en fil que de l'autre côté.

Or on a trouvé, et c'est ce qui fait l'objet de l'invention, un dispositif perfectionné de mesure de longueur de fil absorbée par une machine textile, qui évite ces inconvénients, et qui s'applique en particulier aux machines à appel intermittent du fil. Il évite en effet les ruptures de fil en lisière, tout en permettant un entraînement extrêmement rapide de l'organe tournant par le fil. Ce dispositif est du type comportant un organe tournant entraîné par le fil lors de son déplacement; il est caractérisé en ce qu'il comporte trois guides fixes, sur lesquels passe le fil, positionnés à proximité de l'organe tournant de manière que le fil soit en contact avec l'organe tournant suivant deux arcs sensiblement égaux et de faible valeur. De préférence chacun des arcs de contact entre le fil et l'organe tournant est compris entre 20° et 50°, avantageusement 30°.

Dans le dispositif de l'invention, les effort occasionnés lors de la mise en mouvement du fil sont encaissés pour une grande part par le guide fixe intermédiaire, et non par l'axe de l'organe tournant, ce qui améliore la durée de vie de cet axe, et permet d'adopter un axe de faible diamètre, ce qui limite l'inertie de l'organe tournant.

Lorsque le dispositif de mesure est monté à demeure sur le métier à tricoter, il est implanté préférentiellement entre le tendeur qui se trouve sur le parcours du fil après la bobine alimentaire et le rappel-fil qui rappelle le fil en fin de courses du chariot.

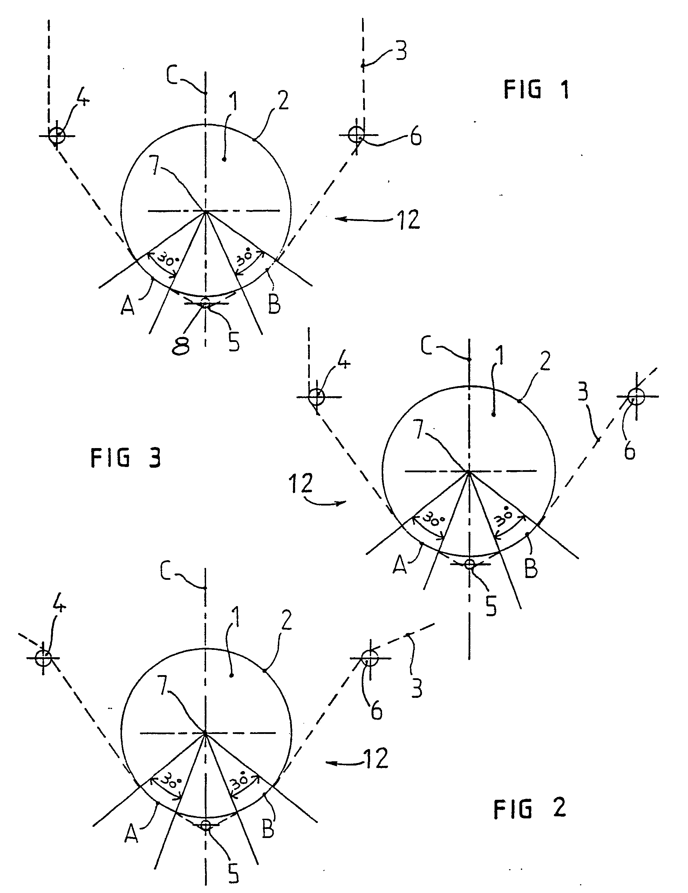

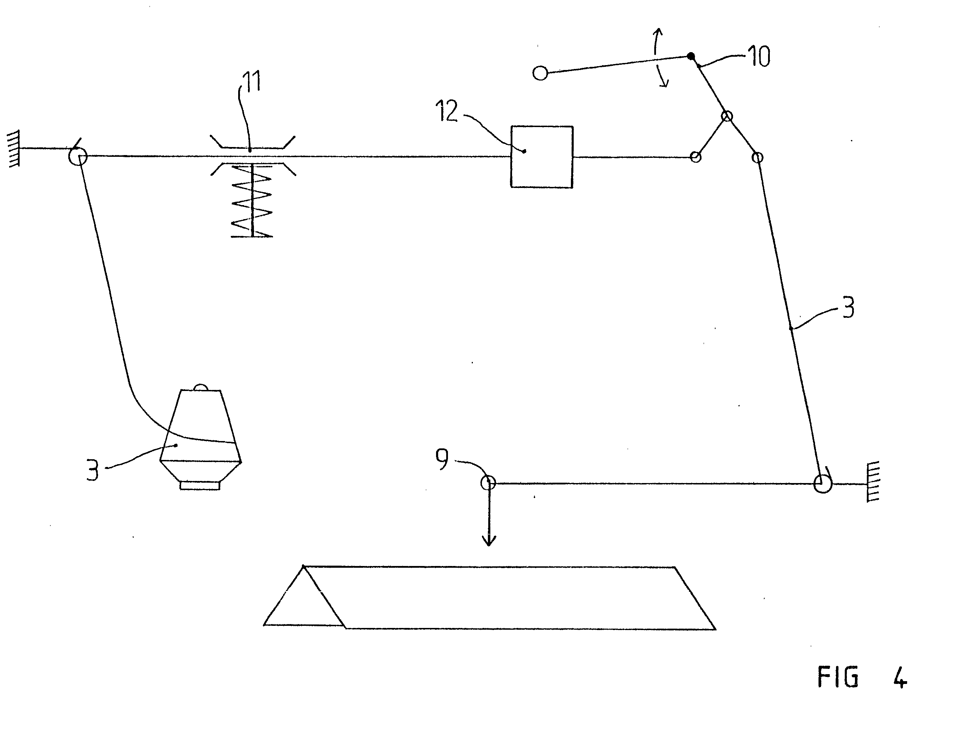

L'invention sera mieux comprise à l'aide de la description qui va suivre d'un mode privilégié du dispositif dans son application à la mesure de la LFA sur métier rectiligne et du dessin annexé dans lequel les figures 1, 2 et 3 sont des vues schématiques du dispositif se différenciant par trois parcours différents du fil, et la figure 4 est une vue schématique du parcours du fil dans le métier à tricoter rectiligne.

L'organe tournant 1 du dispositif 12 de mesure de LFA est une roulette de masse 1,78 gramme et de diamètre 24,91 millimètres; la surface 2 en contact avec le fil 3 est pourvue d'un revêtement positif – non lisse – de nitrile acrylique. A proximité immédiate de la roulette 1 sont placés trois guides fixes 4, 5, 6, sur lesquels passe le fil 3 et dont les axes sont parallèles à l'axe 7 de la roulette 1. Les guides 4 et 6 ont les mêmes dimensions; leur diamètre est de l'ordre de 2 millimètres, le guide 5, situé entre les deux guides 4 et 6, a un diamètre plus petit, de l'ordre de 1,5 millimètre. Ces trois guides sont placés par rapport à la roulette 1 et l'un par rapport à l'autre de manière que le fil 3 soit en contact avec la roulette 1 selon deux arcs A et B sensiblement égaux et de faible valeur, 30° chacun dans les figures annexées. Pour cela il est nécessaire que le guide 5 soit relativement proche de la roulette 1, par exemple de 0,5 à 1 millimètre, et que les deux guides 4 et 6 soient placés de part et d'autre du plan C passant par les axes de la roulette 1 et du guide 5, respectivement 7 et 8, en sorte que le parcours adopté par le fil entre les guides 4 et 6 soit symétrique par rapport au plan C. C'est cette disposition qui donne le fonctionnement le plus fiable au dispositif.

Les guides 4 et 6 sont situés à des distances de la roulette 1 qui sont fonction du parcours du fil 3. Dans le mode de réalisation illustré à la figure 1, le fil 3 suit un parcours qui est totalement extérieur aux trois guides et à la roulette: les guides 4 et 6 sont exactement symétriques par rapport au plan C. A la figure 2, le fil 3 suit un parcours qui passe entre la roulette 1 et les deux guides 4 et 6; là aussi les guides 4 et 6 sont exactement symétriques par rapport au plan C, mais ils sont un peu plus écartés de la roulette que dans le mode de réalisation de la figure 1. A la figure 3, le parcours du fil 3 passe à l'extérieur du guide 4 et entre la roulette et la guide 6; les deux guides 4 et 6 ne sont pas symétriques par rapport au plan C.

On a installé le dispositif 12 de mesure de la longueur de fil absorbée par maille sur un métier à tricoter rectiligne, équipé en particulier sur le parcours du fil 3 d'un chariot 9 qui réalise l'insertion du fil dans les aiguilles du métier, d'un rappel-fil 10 qui rappelle le fil 3 en bout de course du chariot 9, et d'un tendeur 11. Le dispositif de mesure de la LFA est placé sur le parcours du fil 3 entre le tendeur 11 et le rappel-fil 10. Le métier rectiligne a comme jauge E 12; on a réalisé un tricot côte 1 et 1. La longueur de fil absorbée par maille est de l'ordre de 6 millimètres avec un fil de titre 33×2 tex.

La mise en vitesse de la roulette 1, dans les dispositions des 3 guides 4, 5 et 6 montrées à la figure 1, se fait en environ 60 millisecondes, ce qui correspond à un déplacement de 6 centimètres pour le chariot 9 dont la vitesse moyenne est de 1 mètre par seconde. Le dispositif 12 de mesure est réglé de manière que la mesure de la LFA soit effectuée au-delà de ce parcours, par exemple en ne comptant les impulsions électriques émises par le capteur associé qu'après une durée déterminée correspondant à cette phase de glissement. Cette durée étant relativement courte, grâce au dispositif de l'invention, elle est tout à fait compatible avec le tricotage de panneaux de largeur réduite, par exemple de panneaux pour manche de pull-over de l'ordre de 30 centimètres.

A titre de comparaison, on a réalisé dans les mêmes conditions un tricot en ne changeant que le dispositif selon l'invention. En supprimant le guide intermédiaire 5 pour la même roulette 1, il a été impossible de tricoter plus de 100 rangées consécutives sans rencontrer d'incidents de lisière. Avec le dispositif comportant le guide 5, aucun incident de lisière n'a été constaté après plus de 200 000 rangées de mailles.

Le mode de réalisation qui vient d'être décrit n'est pas limitatif de l'invention. Méme si ce dispositif est particulièrement avantageux lorsqu'il est monté à demeure sur un métier rectiligne ou tout métier à tricoter à appel intermittent du fil, il l'est bien sûr également à toute autre machine textile à appel intermittent ou appel permanent du fil. De même il peut faire partie d'un dispositif mobile de mesure, non monté à demeure sur la machine.

**Revendications**

1. Dispositif perfectionné de mesure de la longueur de fil absorbée par une machine textile, du type comportant un organe tournant (1) entraîné par le fil (3) lors de son déplacement, caractérisé en ce qu'il comporte trois guides fixes (4, 5, 6), sur lesquels passe le fil (3), positionnés à proximité de l'organe tournant (1) de manière que le fil (3) soit en contact avec l'organe tournant (1) suivant deux arcs (A, B) sensiblement égaux et de faible valeur.

2. Dispositif selon la revendication 1, caractérisé en ce que chacun des deux arcs de contact est égal et compris entre 20° et 50°, avantageusement égal à 30°.

3. Dispositif selon la revendication 1 ou 2, caractérisé en ce qu'il est monté à demeure sur un métier à tricoter à appel intermittent, entre le tendeur (11) et le rappel-fil (10).

**Patentansprüche**

1. Vorrichtung zum Messen der Länge des von einer Textilmaschine verbrauchten Fadens mit einem sich drehenden Organ (1), das durch den Faden (3) während dessen Bewegung mitgenommen wird, gekennzeichnet durch drei ortsfeste Führungen (4, 5, 6) die der Faden (3) passiert, die in der Nähe des sich drehenden Organs (1) derart angeordnet sind, dass der Faden (3) das sich drehende Organ (1) entlang zweier etwa gleicher kurzer Bögen (A, B) berührt.

2. Vorrichtung nach Anspruch 1, dadurch gekennzeichnet, dass jeder der beiden Kontaktbögen einen Öffnungswinkel von 20–50°, vorzugsweise von 30° aufweist.

3. Vorrichtung nach Anspruch 1 oder 2, dadurch gekennzeichnet, dass sie fest auf einer intermittierend arbeitenden Strickmaschine zwischen dem Spanner (11) und dem Fadenrückholer (10) angeordnet ist.

**Claims**

1. Improved device for measuring the length of yarn absorbed by a textile machine, comprising a rotating member (1) driven by the yarn (3) during displacement thereof, characterized in that it comprises three fixed guides (4, 5, 6) over which the yarn (3) passes, positioned near the rotating member (1) so that the yarn (3) is in contact with the rotating member (1) along two substantially equal arcs (A, B) of low value.

2. Device according to claim 1, characterized in that each of the two arcs of contact is equal and ranging between 20° and 50°, and advantageously equal to 30°.

3. Device according to claim 1 or 2, characterized in that it is permanently mounted on a knitting machine with intermittent feed, between a tension device (11) and a yarn-return (10).

0 169 766

1 / 2

FIG 1

FIG 3

FIG 2

FIG 4

2/2

0 169 766